# DEMANDE DE BREVET EUROPEEN

(11) **EP 2 927 574 A1**
(43) Date de publication de la demande: **07.10.2015**
(21) Numéro de dépôt: 15161710.7
(22) Date de dépôt: 30.03.2015
(51) Int. Cl.: F21V 5/04, F21V 7/16, F21V 17/02, G02B 7/02, G02B 26/08

(54) **Luminaire à photométrie ajustable**

(30) Priorité: 31.03.2014 FR 1452799
(71) Demandeur: Lucibel SA, 92500 Rueil Malmaison (FR)
(72) Inventeur: Houot, Jean-Laurent, 38110 Saint-Clair-de-la-Tour (FR)
(74) Mandataire: Martin, Marie-Aude

(57) **Abrégé**

Ce luminaire (1) comprend une source (2) lumineuse, une optique (4) déformable, l'optique (4) comprenant une surface (6) de sortie destinée à la sortie de la lumière émise par la source (2) lumineuse hors du luminaire (1), et une surface (8) latérale s'étendant depuis la surface (6) de sortie. Le luminaire (1) comprend en outre des moyens de déformation de l'optique (4). Les moyens de déformation comprennent une surface (14) d'appui, mobile par rapport à la surface (8) latérale, et destinée à venir en appui contre la surface (8) latérale. La surface (14) d'appui délimite une ouverture en-travers de laquelle s'étend une portion de l'optique (4), et les moyens de déformation comprennent un organe (18) de rotation destiné à déplacer la surface (14) d'appui par rapport à la surface (8) latérale, de sorte que la surface (14) d'appui appuie contre la surface (8) latérale pour déformer la surface (6) de sortie.

## Description

La présente invention concerne un luminaire à photométrie ajustable.

Les luminaires à photométrie variable comprennent traditionnellement une source lumineuse, une optique déformable et des moyens pour déformer cette optique. La déformation de l'optique modifie, en sortie du luminaire, l'angle du faisceau de lumière émis par la source lumineuse, par exemple en élargissant l'angle de ce faisceau ou en diminuant l'angle de ce faisceau.

Selon le document de brevet US2006062000, les moyens de déformation de l'optique comprennent une électrode à laquelle est appliquée une tension électrique pour générer un champ électromagnétique permettant d'exercer une force sur une membrane déformable distante de l'électrode.

Selon le document de brevet US2006072181, les moyens de déformation de l'optique comprennent un film polymère servant de support à une lentille déformable et deux électrodes agencées sur des faces opposées du film polymère. Lorsqu'une tension électrique est appliquée entre les deux électrodes, cela provoque la déformation du film polymère et par conséquent la déformation de la lentille supportée par ce film polymère.

Les solutions traditionnelles pour déformer une optique reposent cependant sur l'application d'un champ électrique ou électromagnétique, et peuvent être par conséquent sensibles aux conditions de l'environnement extérieur, ce qui peut altérer la stabilité du réglage de la photométrie. Ce réglage peut aussi être altéré du fait de la chaleur générée par le luminaire en fonctionnement, cette chaleur pouvant provoquer la dilatation de composants en contact avec l'optique.

Les solutions traditionnelles sont en outre parfois encombrantes, compte-tenu de la quantité ou de l'agencement des composants utilisés pour déformer l'optique. Elles peuvent aussi être coûteuses.

Aussi la présente invention vise à pallier tout ou partie de ces inconvénients en proposant un luminaire à photométrie ajustable, économique, compact, et offrant la possibilité de maîtriser avec précision et de façon stable la déformation de l'optique, donc le réglage de la photométrie en sortie du luminaire.

A cet effet, la présente invention a pour objet un luminaire à photométrie ajustable, comprenant une source lumineuse, une optique déformable, l'optique comprenant une surface de sortie, destinée à la sortie de la lumière émise par la source lumineuse hors du luminaire, et une surface latérale s'étendant depuis la surface de sortie, le luminaire comprenant en outre des moyens de déformation de l'optique, les moyens de déformation comprenant une surface d'appui mobile par rapport à la surface latérale, et destinée à venir en appui contre la surface latérale, la surface d'appui délimitant une ouverture en-travers de laquelle s'étend une portion de l'optique, et les moyens de déformation comprenant un organe de rotation destiné à déplacer la surface d'appui par rapport à la surface latérale, de sorte que la surface d'appui appuie contre la surface latérale pour déformer la surface de sortie.

Ainsi, le luminaire selon l'invention offre une solution mécanique de déformation de l'optique par contact et déplacement de la surface d'appui et d'un organe de rotation, ce qui limite la sensibilité aux conditions de l'environnement extérieur.

De plus, l'ouverture délimitée par la surface d'appui et à travers laquelle s'étend l'optique assure une compacité améliorée.

Selon un mode de réalisation préféré, l'organe de rotation comprend un premier filetage et le luminaire comprend un deuxième filetage destiné à coopérer avec le premier filetage pour déplacer la surface d'appui.

Ces caractéristiques permettent un déplacement précis de la surface d'appui, donc un réglage fin de la déformation de l'optique, indépendamment de l'environnement extérieur.

De manière avantageuse, l'organe de rotation comprend une première surface de butée et une deuxième surface de butée sur lesquelles sont destinés à prendre appui deux faces d'un outil amovible ou des doigts d'un utilisateur.

Ainsi, le luminaire comprend des moyens exclusivement mécaniques de déformation de l'optique.

Selon une caractéristique avantageuse, la surface latérale est de forme conique ou tronconique.

Ainsi, la déformation de l'optique est maximale pour un déplacement minimal de la surface d'appui. Cela augmente la sensibilité du réglage de la déformation de la surface de sortie, et réduit donc la course nécessaire de l'organe de rotation, ce qui permet une meilleure compacité.

Selon un mode de réalisation avantageux, l'optique comprend une face inférieure présentant un évidement.

Cela facilite la déformation de l'optique, donc la sensibilité du réglage et la compacité du luminaire.

Avantageusement, la source lumineuse est agencée à l'intérieur ou en regard d'une cavité formée par l'évidement.

Cette caractéristique offre en plus l'avantage d'un encombrement limité.

Selon une forme d'exécution avantageuse, l'optique comprend une rainure circonférentielle s'étendant sur un pourtour de la surface latérale.

Cette caractéristique augmente la sensibilité de déformation de l'optique.

Selon un mode de réalisation avantageux, la surface d'appui est agencée sur l'organe de rotation.

Cette caractéristique limite le nombre de composants mécaniques, si bien que le luminaire est économique et présente un encombrement limité.

Selon une autre possibilité, le luminaire comprend une pièce d'interposition interposée entre l'organe de rotation et l'optique.

Cela limite avantageusement l'usure de l'optique, car l'organe de rotation ne frotte pas directement contre l'optique.

Avantageusement, la pièce d'interposition comprend une pluralité de dents flexibles agencées autour et en appui contre l'optique, et l'organe de rotation comprend une surface de frottement destinée venir en appui contre les dents pour faire fléchir les dents lors d'une rotation de l'organe de rotation.

Ainsi, cela provoque une déformation de la surface de sortie de l'optique déformable.

L'avantage de ces caractéristiques est un effet progressif dans la déformation de l'optique. En effet, le déplacement de la surface de frottement le long des dents provoque un effet levier qui nécessite un couple de plus en plus important au fur et à mesure de la rotation de l'organe de rotation.

D'autres caractéristiques et avantages de la présente invention ressortiront clairement de la description ci-après d'un mode particulier de réalisation, donné à titre d'exemple non limitatif, en référence aux dessins annexés dans lesquels :
- Les figures 1 et 2 sont des vues en perspective d'un luminaire selon un mode de réalisation de l'invention,
- Les figures 3 et 4 sont des vues de dessus des luminaires respectivement représentés sur les figures 1 et 2,
- La figure 5 est une vue de dessus d'une partie d'un luminaire selon un mode de réalisation de l'invention,
- La figure 6 est une vue de côté d'une partie d'un luminaire selon un mode de réalisation de l'invention,
- La figure 7 est une vue en coupe selon la ligne I - I de la figure 5,
- La figure 8 est une vue en perspective et coupe partielle d'un luminaire selon un deuxième mode de réalisation de l'invention.

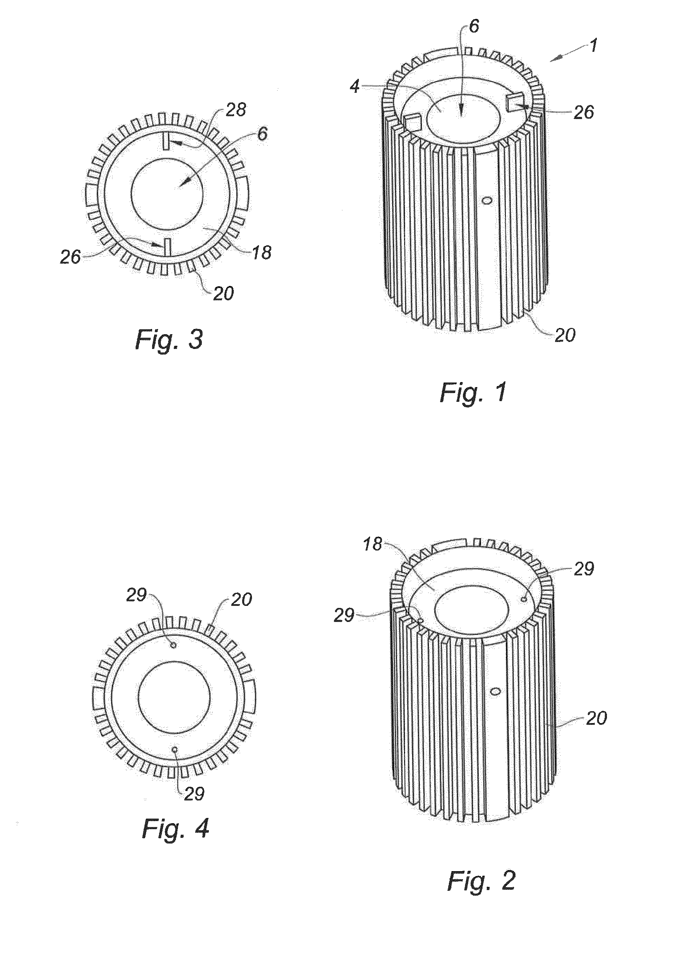

La figure 1 montre un luminaire 1 selon un mode de réalisation de l'invention. Le luminaire 1 est un luminaire à photométrie ajustable, c'est-à-dire qu'il est possible pour un utilisateur de régler l'angle d'un faisceau de lumière émis en sortie du luminaire 1.

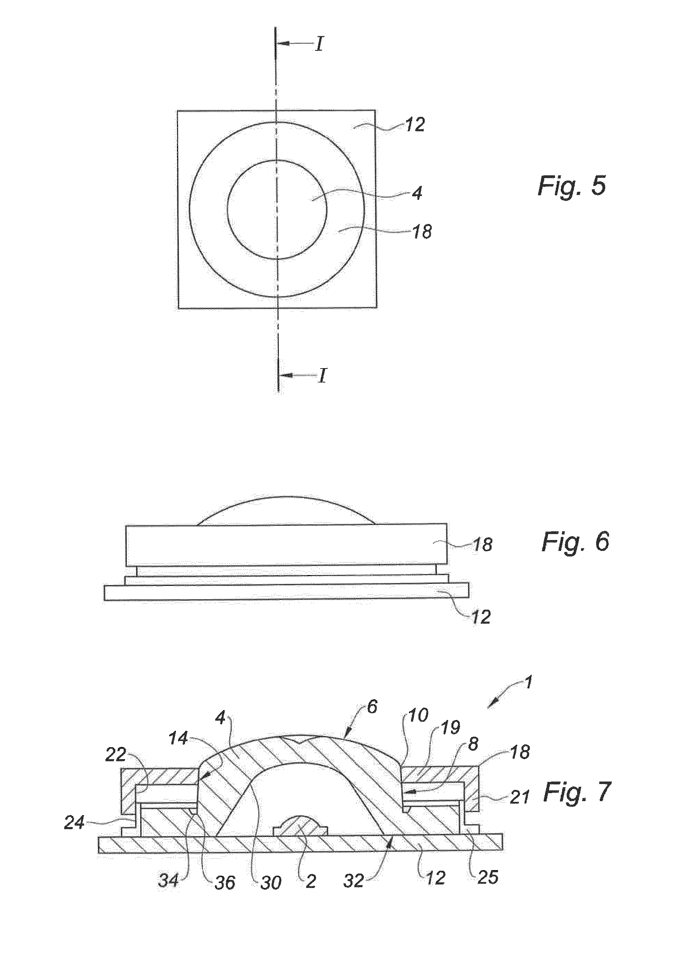

Le luminaire 1 comprend une source 2 lumineuse, visible sur la figure 7, destinée à émettre de la lumière, et une optique 4 déformable destinée à être traversée par la lumière émise par la source 2 lumineuse.

L'optique 4 comprend une surface 6 de sortie qui est destinée à la sortie de la lumière émise par la source 2 lumineuse hors du luminaire 1. La déformation de l'optique 4 permet la déformation de cette surface 6 de sortie, ce qui permet de modifier l'angle du faisceau de lumière émis en sortie du luminaire 1.

L'optique 4 comprend également une surface 8 latérale. La surface 8 latérale s'étend depuis un pourtour 10 de la surface 6 de sortie. Le pourtour 10 de la surface 6 de sortie peut être sensiblement circulaire.

Le luminaire 1 comprend par ailleurs un support 12, destiné à supporter la source 2 lumineuse et/ou l'optique 4.

Le luminaire 1 comprend aussi des moyens de déformation de l'optique 4. Les moyens de déformation de l'optique 4 comprennent une surface 14 d'appui, mobile par rapport au support 12. La surface 14 d'appui est destinée à venir en appui contre la surface 8 latérale. La surface 14 d'appui délimite en outre une ouverture 16 en-travers de laquelle s'étend une portion de l'optique 4. La surface 14 d'appui peut être sensiblement cylindrique

Les moyens de déformation comprennent également un organe 18 de rotation, comme une bague filetée. L'organe 18 de rotation est mobile en rotation autour d'un axe de rotation et est destiné, du fait de sa rotation, à déplacer la surface 14 d'appui par rapport à la surface 8 latérale, de sorte que la surface 14 d'appui appuie contre la surface 8 latérale pour déformer l'optique 4 et par conséquent la surface 6 de sortie.

En se déplaçant, la surface 14 d'appui peut serrer la portion de l'optique 4 s'étendant en-travers de l'ouverture 16. Ainsi, c'est une compression essentiellement radiale qui permet la déformation de l'optique 4.

Comme cela est visible sur les différentes figures, les moyens de déformation sont des moyens exclusivement mécaniques de déformation. Autrement dit, aucun champ électrique ou électromagnétique n'est nécessaire à la déformation de l'optique.

On notera que l'optique 4 peut être avantageusement une optique solide élastique. L'optique 4 peut être en polycarbonate, translucide ou transparent. Par ailleurs, l'optique 4 peut être une pièce de révolution.

L'optique 4 peut être une lentille, notamment une lentille convergente ou divergente.

La surface 8 latérale peut le cas échéant s'étendre autour d'un axe de révolution de l'optique 4, qui peut être confondu avec un axe optique de l'optique 4.

L'organe 18 de rotation est mobile en rotation par rapport au support 12, par exemple autour d'un axe sensiblement perpendiculaire au support 12, un axe de révolution de l'optique 4, et/ou l'axe optique de l'optique 4, ces trois axes pouvant être confondus.

Plus particulièrement, l'organe 18 de rotation peut être en liaison hélicoïdale avec le support 12, c'est-à-dire mobile en rotation par rapport au support autour d'un axe, notamment l'axe optique ou un axe perpendiculaire au support 12, et mobile en translation par rapport au support le long de cet axe.

Le support 12 est destiné à supporter la source 2 lumineuse. Le luminaire 1 peut bien entendu comprendre plusieurs sources 2 lumineuses. La ou les sources 2 lumineuses peuvent correspondre à des diodes électroluminescentes (LED selon l'acronyme anglais).

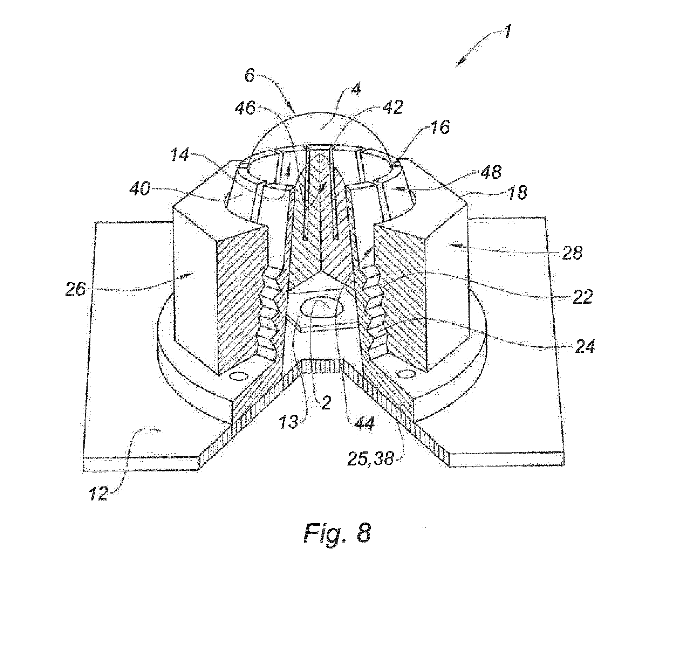

Le support 12 peut être sensiblement plan ; il peut se présenter sous la forme d'une plaque. Le support 12 peut correspondre à un circuit imprimé, du type PCB ou MCPCB, destiné à supporter et à relier électriquement la ou les sources 2 lumineuses. Alternativement, le luminaire 1 peut comprendre un circuit imprimé 13, par exemple du type PCB ou MCPCB, supportant et reliant électriquement les sources lumineuses, et le support 12 peut être adapté pour supporter ce circuit imprimé, comme cela est visible sur la figure 8.

Le luminaire 1 peut avantageusement comprendre un dissipateur 20 thermique pour dissiper la chaleur générée par le luminaire 1 en fonctionnement. Ainsi, cela limite la dilatation de l'organe 18 de rotation ou de la surface 14 d'appui du fait de cette chaleur, ce qui permet de maintenir un réglage stable d'un état de déformation de l'optique 4, en particulier de la surface 6 de sortie.

L'organe 18 de rotation comprend avantageusement un premier filetage 22 et le luminaire 1 comprend un deuxième filetage 24 destiné à coopérer avec le premier filetage 22 pour déplacer la surface 14 d'appui. Le deuxième filetage 24 peut être ménagé soit sur le support 12, soit sur une pièce 25 rapportée sur le support 12.

L'organe 18 de rotation comprend avantageusement une première surface 26 de butée et une deuxième surface 28 de butée sur lesquelles sont destinés à prendre appui deux faces d'un outil amovible (non représenté) ou les doigts d'un utilisateur.

La première surface 26 de butée et la deuxième surface 28 de butée peuvent être sensiblement diamétralement opposées.

Comme cela est illustré sur les figures 2 et 4, la première surface 26 de butée et la deuxième surface 28 de butée peuvent correspondre à la paroi intérieure d'un trou 29 formé sur une face supérieure de l'organe 18 de rotation. Le cas échéant, un outil comprenant deux bras conformés pour entrer dans ces trous permet d'exercer un couple destiné à faire pivoter l'organe 18 de rotation pour déformer l'optique 4.

Comme cela est illustré sur les figures 1 et 3, la première surface 26 de butée et la deuxième surface 28 de butée peuvent correspondre à des faces de languettes s'étendant en saillie depuis une surface supérieure de l'organe 18 de rotation.

Comme cela est illustré sur la figure 8, la première surface 26 de butée et la deuxième surface 28 de butée peuvent correspondre à des méplats de l'organe 18 de rotation.

Comme on peut le voir sur la figure 7, la surface 8 latérale peut avantageusement être de forme conique ou tronconique.

L'ouverture délimitée par la surface 14 d'appui présente un diamètre de dimension comprise entre un diamètre minimum de la surface 8 latérale conique ou tronconique et un diamètre maximum de la surface 8 latérale conique ou tronconique.

Selon le mode de réalisation représenté sur les figures 5 à 7, la surface 8 latérale peut présenter un élargissement progressif en direction du support 12. Bien que cela ne soit pas représenté, la surface 8 latérale peut alternativement présenter un élargissement progressif en direction de la surface 6 de sortie, en s'éloignant du support 12.

Comme on peut le voir sur la figure 7, l'optique 4 peut comprendre un évidement 30 autour duquel s'étend la surface 14 d'appui. Cet évidement 30 est formé à l'intérieur de l'optique 4. L'évidement 30 peut présenter une forme sensiblement parabolique.

La source 2 lumineuse est agencée avantageusement à l'intérieur d'une cavité formée par cet évidement 30 et une face du support 12 contre laquelle appuie l'optique 4.

L'optique 4 peut en effet comprendre une surface 32 de maintien en appui contre le support 12. La surface 32 peut être fixée au support 12.

Comme cela est visible sur la figure 7, l'optique 4 comprend une rainure 34 circonférentielle s'étendant sur un pourtour 36 de la surface 8 latérale. Le cas échéant, la surface 8 latérale s'étend donc entre le pourtour 10 de la surface 6 de sortie et la rainure 34 circonférentielle. La rainure 32 peut présenter une section transversale en V. L'ouverture de cette rainure 32 peut être orientée de façon opposée au support ; autrement dit, le fond de la rainure 32 peut être orienté vers le support 12.

Selon un premier mode de réalisation, visible sur la figure 7, la surface 14 d'appui est une surface intérieure de l'organe 18 de rotation, pouvant être située à l'extrémité d'une portion 19 radiale s'étendant radialement depuis une portion 21 latérale pourvue du premier filetage 22.

Le fonctionnement du luminaire 1 selon le mode de réalisation de la figure 7 est décrit ci-après.

L'utilisateur fait pivoter l'organe 18 de rotation, par exemple au moyen des surfaces 26, 28 de butée. Du fait de cette rotation, les premier et deuxième filetages 22, 24 coopèrent et entraînent un déplacement en translation de l'organe 18 de rotation, selon une direction sensiblement parallèle à l'axe optique et perpendiculaire au support 12. La surface 14 d'appui, située sur l'organe 18 de rotation, se translate également. Au fur et à mesure que la surface 14 d'appui se translate, l'appui radial que la surface 14 d'appui exerce sur l'optique 4 augmente, notamment en raison de la forme conique de la surface 8 latérale, ce qui provoque la déformation de l'optique 4 et par conséquent la déformation de la surface 6 de sortie. Cela modifie l'angle d'un faisceau de lumière émis en sortie du luminaire 1.

Selon un deuxième mode de réalisation, visible sur la figure 8, le luminaire 1 comprend une pièce 38 d'interposition interposée entre l'organe 8 de rotation et l'optique 4, et cette pièce 38 d'interposition comprend la surface 14 d'appui.

Ce deuxième mode de réalisation diffère donc du premier mode de réalisation de la figure 7 en ce que l'organe 18 de rotation n'est pas en contact direct de l'optique 4. Toutefois, le luminaire 1 selon ce deuxième mode de réalisation peut comprendre tout ou partie des autres caractéristiques du luminaire 1 selon le mode de réalisation de réalisation de la figure 7.

L'organe 38 d'interposition comprend avantageusement une pluralité de dents 40 flexibles élastiques séparées les unes des autres par des découpes 42 et agencées autour et en appui contre la surface 8 latérale de l'optique 4.

Selon le mode de réalisation de la figure 8, l'organe 18 de rotation comprend une surface 44 de frottement destinée venir en appui contre chaque dent 40. La surface 44 de frottement est par exemple une surface intérieure de l'organe 18 de rotation, pouvant être située à l'extrémité de la portion 19 radiale s'étendant radialement depuis la portion 21 latérale pourvue du premier filetage 22. Cette surface 44 de frottement peut être de forme conique.

Chaque dent 40 comprend une face 46 intérieure en appui contre la surface 8 latérale de l'optique 4, les faces 46 intérieures des dents formant la surface 14 d'appui.

Chaque dent 40 comprend une face 48 extérieure contre laquelle est destinée à venir en appui la surface 44 de frottement. Cette face 48 extérieure peut être de forme conique, ou inclinée par rapport à l'axe optique, pour que la translation de l'organe 18 de rotation parallèlement à l'axe optique provoque, par frottement de la surface 44 de frottement contre les faces 48 extérieures, une flexion des dents 40.

Le deuxième filetage 24 peut être situé sur la pièce 38 d'interposition. La pièce 38 d'interposition peut être fixée sur le support 12.

Le fonctionnement du luminaire 1 selon le mode de réalisation de la figure 8 est décrit ci-après.

L'utilisateur fait pivoter l'organe 18 de rotation, par exemple au moyen des surfaces 26, 28 de butée. Du fait de cette rotation, les premier et deuxième filetages 22, 24 coopèrent et entraînent un déplacement en translation de l'organe 18 de rotation, selon une direction sensiblement parallèle à l'axe optique et perpendiculaire au support 12. La surface 44 de frottement frotte contre la face extérieure des dents 40 et, du fait de la forme conique de cette face extérieure et/ou de la forme conique de la surface 44 de frottement, les dents 40 sont plaquées radialement contre l'optique 4. La face intérieure des dents 40, formant la surface 14 d'appui, presse la surface 8 latérale de l'optique 4. Ainsi, l'optique 4 se déforme, si bien que sa surface 6 de sortie se déforme aussi. Cela modifie l'angle d'un faisceau de lumière émis en sortie du luminaire 1.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments ou par la substitution d'équivalents techniques, sans sortir pour autant du domaine de protection de l'invention.

## Revendications

1. Luminaire (1) à photométrie ajustable, comprenant une source (2) lumineuse, une optique (4) déformable, l'optique (4) comprenant une surface (6) de sortie, destinée à la sortie de la lumière émise par la source (2) lumineuse hors du luminaire (1), et une surface (8) latérale s'étendant depuis la surface (6) de sortie, le luminaire (1) comprenant en outre des moyens de déformation de l'optique (4), les moyens de déformation comprenant une surface (14) d'appui, mobile par rapport à la surface (8) latérale, et destinée à venir en appui contre la surface (8) latérale, la surface (14) d'appui délimitant une ouverture (16) en-travers de laquelle s'étend une portion de l'optique (4), et les moyens de déformation comprenant un organe (18) de rotation destiné à déplacer la surface (14) d'appui par rapport à la surface (8) latérale, de sorte que la surface (14) d'appui appuie contre la surface (8) latérale pour déformer la surface (6) de sortie.

2. Luminaire (1) selon la revendication 1, **caractérisé en ce que** l'organe (18) de rotation comprend un premier filetage (22) et le luminaire (1) comprend un deuxième filetage (24) destiné à coopérer avec le premier filetage (22) pour déplacer la surface (14) d'appui.

3. Luminaire (1) selon la revendication 1 ou 2, **caractérisé en ce que** l'organe (18) de rotation comprend une première surface (26) de butée et une deuxième surface (28) de butée sur lesquelles sont destinés à prendre appui deux faces d'un outil amovible ou des doigts d'un utilisateur.

4. Luminaire (1) selon l'une des revendications 1 à 3, **caractérisé en ce que** la surface (8) latérale est de forme conique ou tronconique.

5. Luminaire (1) selon l'une des revendications 1 à 4, **caractérisé en ce que** l'optique (4) comprend une face inférieure présentant un évidement (30).

6. Luminaire (1) selon la revendication 5, **caractérisé en ce que** la source (2) lumineuse est agencée à l'intérieur ou en regard d'une cavité formée par l'évidement (30).

7. Luminaire (1) selon l'une des revendications 1 à 6, **caractérisé en ce que** l'optique (4) comprend une rainure (34) circonférentielle s'étendant sur un pourtour (36) de la surface (8) latérale.

8. Luminaire (1) selon l'une des revendications 1 à 7, **caractérisé en ce que** la surface (14) d'appui est agencée sur l'organe (18) de rotation.

9. Luminaire (1) selon l'une des revendications 1 à 7, **caractérisé en ce que** le luminaire (1) comprend une pièce (38) d'interposition interposée entre l'organe (18) de rotation et l'optique (4).

10. Luminaire (1) selon la revendication 9, **caractérisé en ce que** la pièce (38) d'interposition comprend une pluralité de dents (40) flexibles agencées autour et en appui contre l'optique (4), et l'organe (18) de rotation comprend une surface (44) de frottement destinée venir en appui contre les dents (40) pour faire fléchir les dents (40) lors d'une rotation de l'organe (18) de rotation.
